# EUROPEAN PATENT APPLICATION

(11) **EP 2 325 259 A1**
(43) Date of publication of application: **25.05.2011**
(21) Application number: 09176110.6
(22) Date of filing: 16.11.2009
(51) Int. Cl.: C08L 75/08, C08K 3/30, C08K 5/21, C08K 5/3492, C09K 21/10

(54) **Fire retardant for polyurethane foams**

(71) Applicant: H2V BVBA, 4821 Dison (BE)
(72) Inventor: Voortmans, Joannes Franciscus, 2400, Mol (BE)
(74) Representative: BiiP cvba

(57) **Abstract**

An isocyanate or isocyanurate composition comprising:
- a cyanic acid derivate
- urea (((NH₂)₂CO)
- optionally, ammonium salt of sulphate or phosphate.

## Description

### Field of the Invention

The present invention is directed to polyurethane foam compositions and products formulated thereof. In particular, the present invention is directed to fire retardant polyurethane foams.

### Background of the Invention

With growing interest in flexible construction panels for dividing large rooms in smaller places and with the ever increasing requirements regarding fire prevention and fire resistance, it is generally acknowledged that fire retardant and smoke suppressing rigid foam panels are key for modern construction.

The production of useful polymeric materials by reacting organic polyisocyanates with isocyanate-reactive compounds such as polyols and polyamines is well known. The materials produced in this way include polyurethane foams.

In order to reduce the flammability of polyurethane foams, it has been proposed to incorporate fire retardant additives in the foam formulation. Such additives may be liquids such as tris chloroethyl phosphate or solids such as melamine. The inclusion of melamine in foam formulations has been described in US Patent No. 4,258,141, in GB 1585750 and in GB 2163762, the melamine being introduced into the formulation as a mixture with the polyol component. However, polyol compositions comprising melamine are rather unstable and require large capital investments for the production of fire resistant polyurethane foams.

DE 2348838 discloses the preparation of flame retardant isocyanate polyurethane foams using a polyisocyanate component which contains melamine.

EP 0.422.797 describes isocyanate compositions comprising fire retardant additives such as a cyanic acid derivative and comprising dispersed in situ formed polyurea particles. Although the polyurethane foams obtained from said isocyanate compositions show improved fire resistance, the fire retardant properties need to be further improved to meet higher standards of safety market requirements.

### Summary of the Invention

It has now surprisingly been found that an isocyanate or isocyanurate composition comprising (i) a cyanic acid derivate; (ii) urea; and (iii) ammonium sulphate and/or ammonium phosphate allows producing polyurethane foams having both improved fire retardant and smoke suppression properties.

### Description of the Invention

The present invention concerns an isocyanate or isocyanurate composition comprising (i) a cyanic acid derivate; (ii) urea; and optionally (iii) ammonium sulphate and/or ammonium phosphate. Said composition allows the production of polyurethane foams having improved fire retardant and smoke suppression properties.

The cyanic acid derivate preferably is melamine and is preferably present in a amount ranging from 5 to 25, more preferably a amount ranging between 10 and 20 w% based on the weight of the isocyanate or isocyanurate.

The urea is preferably present in a amount ranging between 1 and 10 w% based on the weight of the isocyanate or isocyanurate.

The composition of the present invention preferably comprises ammonium sulphate and/or, the ammonium sulphate being present in a amount ranging between 0.1 and 5 w% based on the weight of the isocyanate or isocyanurate.

The present invention further concerns a product obtainable from an isocyanate or isocyanurate composition according to the present invention, particularly a polyurethane or isocyanurate foam obtainable by the reaction of an isocyanate composition or isocyanurate composition of the present invention with a polyol. The product is preferably a polyurethane foam, more preferably a rigid polyurethane foam, whereby at least one of the cells of the foam is at least partially coated with urea.

It has now surprisingly been observed that a polyurethane or isocyanurate foam obtained from an isocyanate or isocyanurate composition of the present invention demonstrate superior fire resistance and smoke suppression properties.

Without being bound to any theory, it is believed that the urea acts as a binder for the melamine on the surface of the polyurethane foam cells, thereby reinforcing the cell structure and slowing down opening of the cells by fire. As cell burst is slowed down, the release of oxygen present inside the cells is reduced and fire propagation is slowed down.

The products formulated with the compositions of the present invention are found to be especially suitable for amongst others, manufacturing construction panels. Hence, the present invention also addresses a construction panel comprising a polyurethane or isocyanurate foam obtainable from a composition of the invention.

### Description of a Preferred Embodiment

Suitable organic polyisocyanates for the manufacture of compositions according to the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1 ,5-naphthalene diisocyanates and 1,4-diisocyanatobenzene. Other organic polyisocyanates which may be mentioned include the aliphatic diisocyanates such as isophorene diisocyanate, 16-diisocyanatohexane and 4,4'-diisocyanatodicyclohexylmethane.

According to the present invention at least a cyanic acid derivate; urea and and ammonium salt of sulphate or phosphate are added to the polyisocyanates or polyisocyanurates to produce a isocyanate or isocyanurate composition.

Useful derivatives of cyanic acid include cyanamide, dicyanamide, guanidine, biguanidine, melamine and the like and mixtures thereof. Melamine is the preferred cyanic acid derivative. The amount of cyanic acid derivative which may be present in the isocyanate of isocyanurate composition of the invention should be appropriate to the fire retardant effect it is desired to achieve in the ultimate polymer and this may be determined by trial. Compositions according to the present invention contain from about 20 to about 50 %, preferably 35 to 40 % by weight of cyanic acid derivative based on the weight of polyisocyanate or polyisocyanurate although compositions containing smaller or larger amounts can also be useful.

The particle size of the solid fire retardant additive may vary but melamine is preferably employed in a finely divided form, typically having an average particle size of not more than about 100 microns.

The urea (NH₂)₂CO that can be used for the present invention is for example commercialized by Yara® as UTECH® 46.

The urea is present in an amount ranging between 1 and 10 w% based on the weight of the isocyanate or isocyanurate and preferably in an amount ranging between 3 and 7 w%.

The composition according to the present invention preferably comprises ammonium sulphate. The amount of ammonium sulphate present in the composition according to the present invention ranges between 0.1 and 5 w% based on the weight of the isocyanate or isocyanurate.

Suitable isocyanate-reactive compounds to be used in the process of the present invention include any of those known in the art for the preparation of rigid polyurethane or urethane-modified polyisocyanurate foams. Of particular importance for the preparation of rigid foams are polyols and polyol mixtures having average hydroxyl numbers of from 300 to 1000, especially from 300 to 70 mg KOH/g, and hydroxyl functionalities of from 2 to 8, especially form 3 to 8. Suitable polyols have been fully described in the prior art and include reaction products of alkylene oxides, for example ethylene oxide and/or propylene oxide, with initiators containing form 2 to 8 active hydrogen atoms per molecule. Suitable initiators include: polyols, for example glycerol, trimethylolpropane, triethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes.

The quantities of the polyisocyanate compositions and the polyfunctional isocyanate-reactive compositions and the polyfunctional isocyanate-reactive compositions to be reacted will depend upon the nature of the rigid polyurethane or urethane modified polyisocyanurate foam to be produced and will be readily determined by those skilled in the art.

In addition to the polyisocyanate and polyfunctional isocyanate-reactive compositions and blowing agents, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine or triethylene diamine, isocyanurate catalysts such as quaternary ammonium salts or porassium salts, and fillers such as carbon black.

The process of manufacturing the polymeric product of the present invention is carried out in the presence of any of the blowing agents known in the art for the preparation of rigid polyurethane and urethane-modified polyisocyanurate foams. Such blowing agents include water or other carbon dioxide-evolving compounds, or inert low boiling compounds having a boiling point of above -70 C at atmospheric pressure.

Where water is used as blowing agent, the amount may be selected in known manner to provide foams of the desired density, typical amounts being in the range from 0.05 to 5 % by weight based on the total reaction system.

Suitable inert blowing agents include those well known and described in the art, for example, hydrocarbons, dialkyl ethers, alkyl alkanoates, aliphatic and cycloaliphatic hydrofluorocarbons, hydrochlorofluorocarbons, chlorofluorocarbons, hydrochlorocarbons and fluorine-containing ethers.

Preferred classes of blowing agents for making rigid polyurethane foams as well as rigid urethane-modified polyisocyanurate foams are hydrocarbons, hydrofluorocarbons and hydrochlorofluorocarbons.

Examples of preferred blowing agents include isobutane, n-pentane, isopentane, cyclopentane or mixtures thereof, 1-dichloro-2-fluoroethane (HCFC 141b), 1, 1, 1-trifluoro-2-fluoroethane (HFC 134a), chlorodifluoromethane (HCFC 22), 1, 1-difluoro-3, 3, 3-trifluoropropane (HFC 245fa) and blends thereof.

The blowing agents are employed in an amount sufficient to give the resultant foam the desired bulk density which is generally in the range 15 to 70 kg/m3, preferably 20 to 50 kg/m3, most preferably 30 to 45 kg/m3.

Typical amounts of blowing agents are in the range 2 to 25 % by weight based on the total reaction system

The foam-forming reaction mixture may contain one or more further fire retardant additives. Thus, if desired, the foam-forming mixture can contain a further cyanic acid derivative and/or one other solid fire retardant additive and/or at least one liquid fire retardant additive. Examples of solid fire retardant additives which may be present in the foam-forming mixture include antimony compounds, for example antimony oxides and antimony trihalides, boron compounds, for example borax, boric acid, zinc borate and ammonium fluoroborate, alumina trihydrate, ammonium phosphate, ammonium molybdate, molybdenum oxides and, especially, cyanic acid derivatives such as cyanamide, dicyandiamide, guanidine, biguanidine, cyanuric acid and solid esters thereof and, particularly, melamine, ammonium polyphosphate or guanidine carbonate. Examples of liquid fire retardant which may optionally be present in the foam-forming mixture include tris-2-chloroethyl phosphate, tris chloropropyl phosphate, tricresyl phosphate and tris-2,3-dibromopropyl phosphate. The further fire retardant additives can be present in the isocyanate or isocyanurate composition and/or in a composition with the isocyanate-reactive compounds and/or can be added separately to the foam-forming mixture.

The particle size of the solid fire retardant additive may vary but melamine is preferably employed in a finely divided form, typically having an average particle size of not more than about 100 microns.

In operating the process for making rigid foams according to the invention, the known one-shot, prepolymer or semi-polymer techniques may be used together with conventional mixing methods and the rigid foam may be produced in the form of a slabstock, mouldings, cavity fillings, sprayed foam, frothed foam or laminates with other materials such as hardboard, plasterboard, plastics, paper or metal.

The produced foam preferably is a cellular rigid foam, wherein at least one of the cells is at least partially coated with urea.

### Example:

A preferred reaction mixture for obtaining a 100gr of a polymeric product according the present invention comprises:
42 gr of a polyol
48 gr of a isocyanate;
9,027 gr melamine
1,062 gr urea ((NH₂)₂CO)
0,531 gr ammonium sulphate

## Claims

1. An isocyanate or isocyanurate composition further comprising:
- a cyanic acid derivate
- urea(((NH₂)₂CO)

2. The isocyanate or isocyanurate composition according to claim 1, further comprising ammonium salt of sulphate or phosphate.

3. The isocyanate or isocyanurate composition according to claim 1 or 2, wherein said cyanic acid derivate is melamine.

4. The isocyanate or isocyanurate composition according to any of claims 1 to 3, wherein the cyanic acid derivate is present in an amount ranging between 20 and 50 w% based on the weight of isocyanate or isocyanurate.

5. The isocyanate or isocyanurate composition according to any of claims 1 to 3, wherein the cyanic acid derivate is present in an amount ranging between 35 and 40 w% based on the weight of isocyanate or isocyanurate.

6. The isocyanate or isocyanurate composition according to any of claims 1 to 5, wherein the urea is present in an amount ranging between 1 and 10 w% based on the weight of isocyanate or isocyanurate.

7. The isocyanate or isocyanurate composition according to any of claims 2 to 6, wherein the ammonium salt is present in an amount ranging between 0.1 and 5 w% based on the weight of isocyanate or isocyanurate.

8. A polymeric product obtainable from a composition as identified in any of claims 1 to 7.

9. The polymeric product according to claim 8, wherein said product is a polyurethane.

10. The polymeric product according to claim 8, wherein said product is a polyurethane foam.

11. The polymeric product according to claim 10, wherein said polyurethane foam is a rigid foam.

12. The polymeric product according to claim 10 or 11, wherein said foam comprises cells and wherein at least one of said cells is at least partially coated with urea.

13. A construction panel comprising a polymeric product as identified in any of claims 8 to 12.

14. A fire retardant composition comprising:
- a cyanic acid derivate
- urea(((NH₂)₂CO)

15. The fire retardant composition according to claim 14 further comprising ammonium salt of sulphate or phosphate.
